# EUROPEAN PATENT APPLICATION

(11) **EP 4 475 229 A1**
(43) Date of publication of application: **11.12.2024**
(21) Application number: 23305906.2
(22) Date of filing: 07.06.2023
(51) Int. Cl.: H01M 4/60, H01M 4/38, H01M 4/04, H01M 10/36, H01M 4/02, H01M 4/64

(54) **QUINONE-TYPE MOLECULES FOR ZINC-ION AQUEOUS BATTERIES**

(71) Applicant: Centre National de la Recherche Scientifique, 75016 Paris (FR); NANTES UNIVERSITÉ, 44035 Nantes Cedex 1 (FR)
(72) Inventor: GAUBICHER, Joël, 44000 NANTES (FR); GRENZ, David, 44000 NANTES (FR); PELLEGRIN, Yann, 44700 ORVAULT (FR); ODOBEL, Fabrice, 44300 NANTES (FR); POIZOT, Philippe, 44119 TREILLIERES (FR)
(74) Representative: Novagraaf Technologies

(57) **Abstract**

Electrode material comprising a quinone, wherein the quinone comprises at least one and preferably two hydrophobic functional groups, preferably selected among an aliphatic group and most preferably a branched alkyl group.

## Description

### Technical field

The present invention belongs to the field of Zn-ion battery (ZnB), and relates more specifically to a cathode material integrating organic molecules providing electroactivity in the solid state, and more particularly concerns the use of quinone type molecules as the cathode electroactive material.

In the description below, references between (**[ ])** refer to the list of references at the end of the examples.

### Technical background

Zn-ion batteries comprise a zinc anode coupled with a cathode material ; the cathode material usually contains inorganic compound such as manganese and vanadium metal oxides. Despite their ability to deliver high electrical capacity (referred to as capacity in the following) these compounds exhibit relatively low cycle-life and Zn²⁺ insertion kinetics. Alternative inorganic compounds such as Prussian blue and/or polyanionic are plagued with low capacity despite relatively high potentials can be reached. Also toxicity of vanadium based compounds renders them difficult to manipulate in large scale.

Search has been made to substitute those inorganic materials in the positive electrode by electroactive organic molecules that can potentially reversibly react with multiple cations and/or anions. Among organic materials, quinone compounds show good environmental friendliness. They widely exist in nature, and the redox process between quinone and hydroquinone (the protonated reduced form) is an important physiological progress in living organisms. Therefore quinones provide the advantage of simple synthesis, corresponding to a reduced cost. However, many quinone molecules are prone to dissolution in aqueous electrolytes especially in mildly acidic to basic pH. The dissolution of the electroactive material either in its quinone or/and its hydroquinone state induces a loss of capacity until the saturation limit is reached in the electrolyte. In addition, solubilized quinone can trigger the corrosion of the zinc electrode and promote inhomogenous zinc surface along with subsequent dendrite growth on cycling.

Small quinone type molecules reported in the literature for ZnB application exhibit non negligible solubility in conventional zinc based aqueous electrolytes **[1]** - **[6].** In addition, because the oxidized and reduced forms are successively occurring upon charge/discharge it should be noted that solubility of hydroquinone is significantly higher in aqueous media than the oxidized one. 1,4-benzohydroquinone for instance is six times more soluble in water than 1,4-benzoquinone. Also, it is noted that salt counter-part of hydroquinone where -OH is replaced by complexation of the quinoate by a metallic cation from the electrolyte may show even larger solubility than the hydroquinone form. This point is well illustrated by ref **[1]** reporting (i) a stable capacity on cycling of the PTO / PTOH hydroquinone form in 4.4 M H₂SO₄ electrolyte which is therefore insoluble at pH 0 but (ii) an immediate and pronounced capacity decay in neutral Li₂SO₄ 2.5 M owing to the formation of (PTO⁻-Li⁺) upon complexation with Li cation.

To avoid the inconveniences of the background art, investigations have to be made to render the use of quinone type molecules more suitable in ZnB.

### Detailed description of the invention

The invention therefore relates to an electrode material comprising a quinone wherein the quinone is nearly insoluble in water.

Preferably, the quinone comprises at least one and preferably two hydrophobic functional groups, preferably selected among an aliphatic group and most preferably a branched alkyl group.

The inventors have discovered that the functionalization of a quinone or hydroquinone derivative with at least one, and advantageously with two hydrophobic groups such as tert-butyl groups strongly mitigates its solubility in an zinc aqueous electrolyte. These one or more ter-butyl groups makes it possible to limit or even eliminate the dissolution of the material in the battery electrolyte and thus to maintain the value of the capacity of the electrode at a value higher than 80% of its maximum capacity (160 mAh/g) over a greater number of cycles. This approach works for a wide range of salt concentrations in the electrolyte from 0.1 M to 50 M and for a wide range of electrolyte salts (1 M to approx. 30-40 molal). This strategy of functionalization with hydrophobic group(s) can be extended by to other groups such as -CF₃, -NO₂ or an alkane chain or their combination.

The inventors have also discovered that surprisingly, in contrast to other cations with similar or higher charge/size ratio, the coupling of an aqueous electrolyte containing Zn²⁺ ions with the resulting molecule allows to strongly reduce the potential hysteresis between oxidation and reduction processes compare to other aqueous electrolytes containing alkaline (Li⁺, Na⁺,... ) or alkaline earth ion (Mg²⁺) or Al³⁺, while still showing a +300 mV gain vs Li⁺, therefore making the electrode material according to the present invention a material of choice for zinc battery applications.

Advantageously, the quinone is selected among a polyquinone, a polysubstituted benzoquinone molecule and a hydroquinone molecule.

Hence, the term "quinone" in the context of the present invention can be either a quinone molecule as such or its protonated reduced form named hydroquinone. The polysubstituted benzoquinone molecules comprises at least the disubstituted benzoquinone molecules.

Advantageously, the quinone of the electrode material according to the invention has a molecular structure according to one of the formulas I to IV represented below:

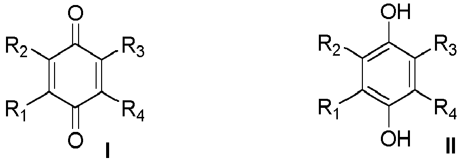

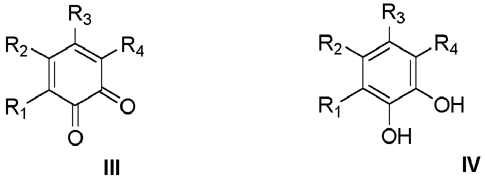

R₁, R₂, R₃ and R₄ being independently selected among a hydrogen atom, an alkyl functional group and a halogen atom; and at least two of the four R₁, R₂, R₃ and R₄ generic groups being a branched alkyl group. The halogen atom being preferably a chlorine atom, and the branched alkyl group being preferably selected among an isopropyl and a tertiobutyl group, and most preferably the branched alkyl group is a tertiobutyl group.

Advantageously, in compounds according to formulas **I** or **II**, at least one of the two following option is verified: R₁ is cyclically linked to R₂ to form a six member ring aromatic cycle and R₃ is cyclically linked to R₄ to form a six member ring aromatic cycle; and
in compounds according to formulas **III** or **IV,** R₃ is cyclically linked to R₄ to form a six member ring aromatic cycle.

Advantageously, and alternately to the preceding paragraph, the quinone is selected among one of the following molecules:

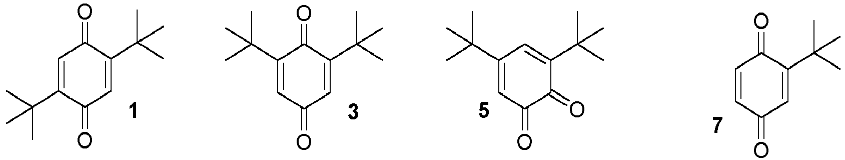

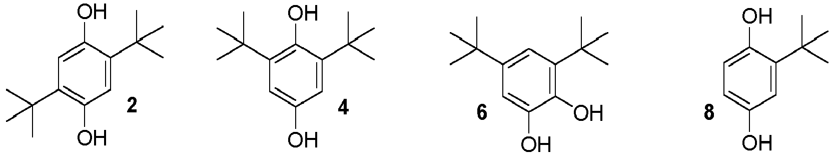

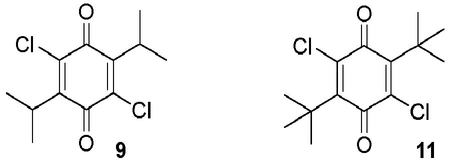

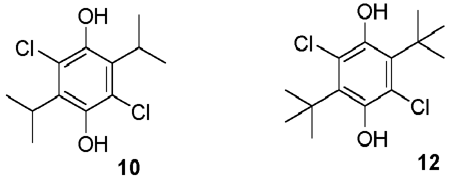

Preferably, the quinone is selected among one of the compounds **1** to **8, 11** and **12,** advantageously the quinone is selected among one of the compounds **1** to **8,** and most preferably among one of the compounds **1** to **6**.

Complementarily, or alternatively, to the above description of the invention, the quinone has preferably a maximum solubility threshold of 300 µmol/L in the aqueous electrolyte of zinc batteries, advantageously the maximum solubility threshold is of 250 µmol/L, and more preferably it is of 210 µmol/L.

Another object of the present invention concerns a cathode comprising the electrode material described previously in connection with the present invention. Preferably, the electrode material is integrated in a support material.

An other object of the invention is a zinc-ion aqueous battery comprising zinc metal at the negative electrode and comprising the cathode described previously in connection with the present invention.

Another object of the present invention concerns a process for the preparation of an electrode material according to the present invention, comprising the following steps:
- mixing a quinone in solid form with a mortar and pestle to obtain a homogeneous powder; and
- adding a polymer material to the powder pressing it by hand with the pestle to obtain the electrode material. The obtained film is preferably a self-standing film. Preferably, the electrode material obtained by the process according to the present invention is a composite material, the composite material can be, for example, a composite film.

Advantageously, the polymer material used in the process according to the present invention is a polytetrafluoroethylene polymer (PTFE).

Another object of the present invention concerns the use of the electrode material according to present invention, wherein the electrode material is preferably a film obtained according to the process described above in the context of the present invention, and is integrated in the positive electrode of an aqueous battery upon pressing the electrode film above 600 MPa on a metal current collector.

Advantageously, the aqueous battery is a zinc-ion aqueous battery bearing metal zinc at the negative electrode.

The invention will now be further described solely by way of examples and with reference to the accompanying drawings, which should not be considered as restricting the scope of the invention and which are presented for illustrative purposes only.

### Experimental part

### Devices and protocols

Chemicals were purchased from ABCR^{®}, Acros-Organics^{®}, Alfa-Aesar^{®}, Fluorochem^{™}, Sigma-Aldrich^{®} or TCI^{®} and used directly without further purification unless otherwise noted. Moisture- or oxygen-sensitive reactions were carried out in dried glassware, heated under vacuum, using standard Schlenk techniques in a dry argon atmosphere. Solvents were purchased and used in analytical or HPLC grade.

### Characterization techniques

**Flash column chromatography** was carried out using silica gel 60, grain size 40-63 µm (230-400 mesh) from MACHERY-NAGEL^{™}.

**Analytical thin layer chromatography** was carried out using silica gel-coated aluminum plates with a fluorescence indicator (MERCK^{®} 60 F₂₅₄ or MACHERY-NAGEL ALUGRAM Xtra SIL G/UV₂₅₄). Detection was carried out by using short wave UV light (*λ*ₘₐₓ = 254 nm).

**NMR spectra** were recorded at 300 K, unless otherwise noted, on the following spectrometer: BRUKER^{®} *Avance 300* [300.1 MHz (¹H), 75.9 MHz (¹³C). ¹H NMR are referenced to the residual solvent signal of the respective solvent: CDCl₃: δ = 7.26 ppm and DMSO-*d*₆: δ = 2.50 ppm. ¹³C NMR spectra are referenced to the following signals: CDCl₃. δ = 77.16 ppm and DMSO-*d*₆: δ = 39.52 ppm. Analysis followed first order, and the following abbreviations for multiplets were used: singlet (s), doublet (d), triplet (t), quartet (q), septet (hept), multiplet (m) and combinations thereof *i.e*. doublet of doublets (dd). Coupling constants (*J*) are given in Hertz [Hz].

**High-resolution mass (HRMS) spectra** were obtained by electrospray ionization coupled with high resolution ion trap orbitrap (LTQ-Orbitrap, ThermoFisher^{®} Scientific,) working in ion-positive or ion-negative mode.

***Thermal analyses*** were performed with a NETZSCH STA 449F3 device under Argon atmosphere. ***Fourier transform infra-red spectroscopy (FTIR)*** spectra were collected with a Bruker^{®} Vertex 70 device in ATR mode, using a DTGS detector at a resolution of 4 cm⁻¹.

***Scanning electron microscopy (SEM)*** was performed using a JEOL JSM-7600F microscope.

***Energy-dispersive X-ray spectroscopy (EDS)*** was performed with a Hitachi^{®} HF-2000.

***UV-Vis Spectroelectrochemistry*** of Active materials was conducted using a BUNDLE-FLAME-ABS Ocean Optics spectrometer within a glove box (Braun) under Ar with less than 1ppm O₂. Each scan (0.7s/scan) is the average of 50 fast-scans of 1.4 10⁻² s recorded from 250 to 1050 nm. All the electrodes were prepared following the procedure described in the next section ("Electrode preparation") were mounted in a glove bag under constant argon flow and cycled by cyclic voltammetry.

***Electrode preparation:*** Unless otherwise specified, the composite electrode composition was 70 wt% active material, 25 wt% Ketjen Black, and 5 wt% PTFE. The final electrode mixture was pressed at 624 MPa on a stainless steel (AISI 304L) grid current collector. Unless otherwise specified, the electrode loadings were in the 10-12 mg/cm² range. ***Electrochemical tests*** were performed using either SP 300 or VMP potentiostats from Bio-logic^{™} SAS (Claix, France). Half-cell tests were performed using a threefold oversized counter-electrode (80 wt% activated carbon Norit 1600, 10 wt% Ketjen Black, and 10 wt% PTFE) to ensure its potential remained within the stability window of the electrolyte. Full cell tests were performed using an excess zinc counter electrode. In both cases, the home-made electrochemical cell contained 3 ml of electrolyte and roughly 2 mg (10mg/cm²) of active material to favor dissolution process if any.

A standard cycling test is defined as a series of 30 successive CV cycles at 1 mV/s, followed by galvanostatic cycling at 0.1 A/g with 3 minutes equilibration upon each half cycles.

All tests were performed within glove box (Braun^{®}) under Ar with less than 1ppm O₂. Experimental errors related to capacity values were always below 5% using our protocols and set-up.

### Syntheses

### Example 1: 2,5-Dichloro-3,6-bis(1-methylethyl)-2,5-cyclohexandiene-1,4-dione (tmp1; compound 9)

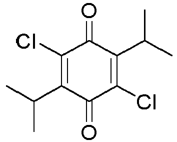

Chloranil (0.99 g, 3.99 mmol) and KOH (18.3 g, 4.59 mmol, 4.58 eq.) were suspended in iso-propanol (20.0 mL). The green mixture was refluxed for 90 min, before cooling down to -18 °C. After 15 h at this temperature the precipitate was filtered off and washed with cold H₂O and EtOH. The crystals were dried under vacuum to yield compound **9** (440 mg, 1.68 mmol).

**¹H NMR** (300 MHz, DMSO-*d*₆): δ 5.30 (hept, *J* = 6.2 Hz, 2H), 1.26 (d, *J* = 6.2 Hz, 12H); **¹³C NMR** (76 MHz, DMSO-*d*₆): δ 178.3, 169.5, 158.4, 77.2, 23.0. **HRMS** (pos. ESI): *m*/*z* calcd for C₁₂H₁₅Cl₂O₂ 261.0444 [M+H]⁺, found 261.0447.

### Example 2: Phenyl-1,4-benzoquinone (tmp2, compound 13)

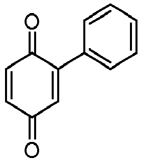

Quinone (217 mg, 2.01 mmol), phenylboronic acid (366 mg, 2.94 mmol, 1.47 eq.), Fe(NO₃)₃ × 9 H₂O (160 mg, 0.40 mmol, 0.20 eq.) and K₂S₂O₈ (2.16 g, 8.00 mmol, 3.99 eq.) were added to a flask. H₂O (2 mL) and trifluorotoluene (2 mL) were added and it was stirred at 70 °C for 62 h. After cooling to room temperature, more H₂O and EtOAc were added, the layers were separated, and the aqueous layer was extracted with EtOAc (3 × 20 mL). The combined organic layer was washed with brine (2 × 50 mL), dried (MgSO₄), filtered and evaporated to dryness. **Tmp2** (343 mg, 1.86 mmol) was obtained after flash column chromatography (petrol ether/CH₂Cl₂: 1/1) as yellow crystals.

***R*_{f}** 0.27 (petrol ether/CH₂Cl₂: 1/1); **¹H NMR** (300 MHz, CDCl₃): δ 7.52-7.41 (m, 5H), 6.93-6.81 (m, 3H).

### Example 3: 2-(4-Tolyl)-1,4-benzoquinone (tmp3, compound 14)

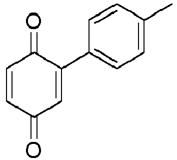

Quinone (219 mg, 2.02 mmol), p-tolylboronic acid (409 mg, 3.01 mmol, 1.49 eq.), Fe(NO₃)₃ × 9 H₂O (165 mg, 0.41 mmol, 0.20 eq.) and K₂S₂O₈ (2.16 g, 8.00 mmol, 3.96 eq.) were added to a flask. H₂O (2 mL) and trifluorotoluene (2 mL) were added and it was stirred at 70 °C for 62 h. After cooling to room temperature, more H₂O and EtOAc were added, the layers were separated, and the aqueous layer was extracted with EtOAc (3 × 20 mL). The combined organic layer was washed with brine (2 × 50 mL), dried (MgSO₄), filtered and evaporated to dryness. **Tmp3** (348 mg, 1.76 mmol) was obtained after flash column chromatography (cyclohexane/EtOAc: 1/0 to 30/1) as yellow crystals.

***R*_{f}** 0.31 (cyclohexane/EtOAc: 30/1); **¹H NMR** (300 MHz, CDCl₃): δ 7.41-7.37 (m, 2H), 7.28-7.27 (m, 2H), 6.88-6.79 (m, 3H), 2.40 (s, 3H).

### Example 4: 2,5-Dichloro-3-phenyl-2,5-cyclohexandiene-1,4-dione (tmp4, compound 15)

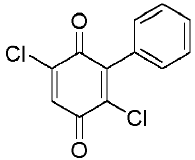

2,5-Dichloro-1,4-benzoquinone (188 mg, 1.06 mmol), phenylboronic acid (492 mg, 4.04 mmol, 3.80 eq.), Fe(NO₃)₃ × 9 H₂O (165 mg, 0.41 mmol, 0.38 eq.) and K₂S₂O₈ (2.16 g, 8.00 mmol, 7.53 eq.) were added to a flask. H₂O (2 mL) and trifluorotoluene (2 mL) were added and it was stirred at 70 °C for 62 h. After cooling to room temperature, more H₂O and EtOAc were added, the layers were separated, and the aqueous layer was extracted with EtOAc (3 × 20 mL). The combined organic layer was washed with brine (2 × 50 mL), dried (MgSO₄), filtered and evaporated to dryness. **Tmp4** (105 mg, 0.41 mmol) was obtained after two consecutive steps of flash column chromatography (petrol ether/EtOAc: 50/1 and cyclohexane/EtOAc: 1/0 to 30/1) as yellow crystals.

***R*_{f}** 0.24 (cyclohexane/EtOAc: 30/1); **¹H NMR** (300 MHz, CDCl₃): δ 7.55-7.46 (m, 3H), 7.38-7.15 (m, 3H).

### Example 5: 2,5-Dichloro-3-(4-tolyl)-2,5-cyclohexandiene-1,4-dione (tmp5, compound 16)

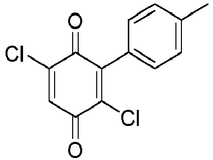

2,5-Dichloro-1,4-benzoquinone (354 mg, 2.00 mmol), p-tolylboronic acid (800 mg, 5.88 mmol, 2.94 eq.), Fe(NO₃)₃ × 9 H₂O (162 mg, 0.40 mmol, 0.20 eq.) and K₂S₂O₈ (2.17 g, 8.02 mmol, 4.00 eq.) were added to a flask. H₂O (2 mL) and trifluorotoluene (2 mL) were added and it was stirred at 70 °C for 62 h. After cooling to room temperature, more H₂O and EtOAc were added, the layers were separated, and the aqueous layer was extracted with EtOAc (3 × 20 mL). The combined organic layer was washed with brine (2 × 50 mL), dried (MgSO₄), filtered and evaporated to dryness. **Tmp5** (321 mg, 1.20 mmol) was obtained after two consecutive steps of flash column chromatography (petrol ether/EtOAc: 50/1 and cyclohexane/EtOAc: 1/0 to 30/1) as yellow crystals.

***R*_{f}** 0.29 (cyclohexane/EtOAc: 30/1); **¹H NMR** (300 MHz, CDCl₃): δ 7.31-7.28 (m, 2H), 7.22-7.13 (m, 3H), 3.42 (s, 3H).

### Study of the effect of the quinones

### Example 6: comparative study of the role of the substitution on the quinone ring - compound 2

In this family of compounds **1-12,** compounds **1-8** are among the most widely used food antioxidants due to their low cost, high performance, and wide availability. A major advantage is their stability at high temperatures (a key property in the battery industry) retaining their antioxidant capabilities (being the hydroquinone form) during and after baking and frying in air. Diisopropylhydroquinone and tert-butylhydroquinone (TBHQ) derivatives have been investigated along with phenyl- and tolylbenzoquinones for the sake of comparison.

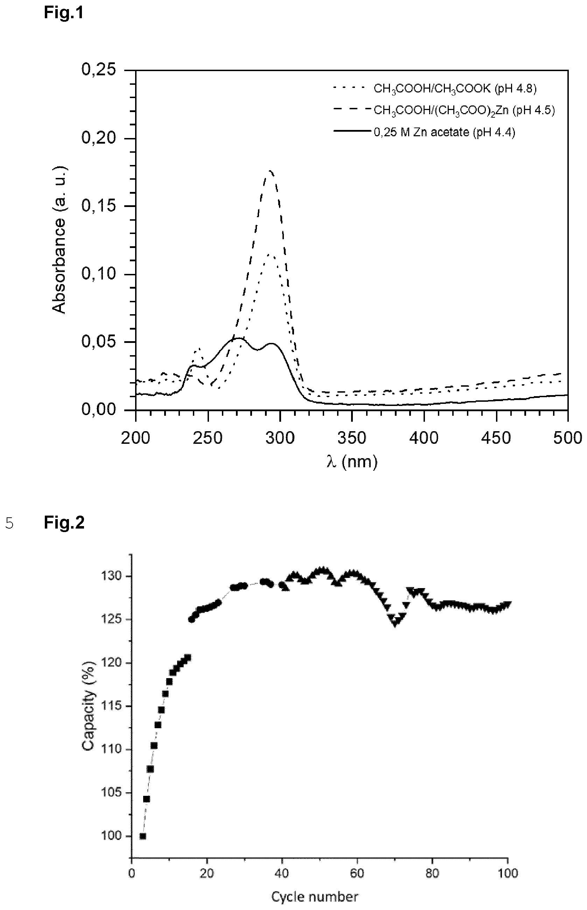

The solubility of compounds **1-12** have been determined by UWis spectroscopy upon dispersion of the solid in various electrolytes: (i) acetic acid/potassium acetate (50/50 by volume, pH 4.8), (ii) acetic acid/zinc acetate (50/50 by volume, pH 4.5) (iii) zinc acetate 1.25 M (pH 4.2) for 1 week at room temperature. All experiments were conducted under argon atmosphere (O₂ < 1 ppm). Results are presented in figure 1.

Figure 1 shows the UV Vis spectrum of soluble species upon immersion of compounds **2** (2,5 DTBHQ) in (bold dotted line) acetic acid/potassium acetate (50/50 by volume), (thin dotted line) acetic acid/zinc acetate (50/50 by volume, pH 4.5) (solid line) zinc acetate 1.25 M for 1 week at room temperature.

Upon determination of the absorption coefficient ε using the 290 nm peak for compounds **2** (2,5 DTBHQ) and compound **8** (MTBHQ) and the 260 nm one for compounds **1** (2,5 DTBQ), results show that the saturation limit of compounds **2** (2,5 DTBHQ) is reached at nearly 45 mg/L (204 µmol/L) in the three electrolytes. In comparison that of compound **1** (2,5 DTBQ) is nearly ten times lower (5.7 mg/L, 26.16 µmol/L), while that of compound **8** (MTBHQ) is nearly 100 times higher (3.35 g/L, 20.4 mM/L). These results highlight the ability of a second terbutyl group to block the solubility as for compounds **1** (2,5 DTBQ) and strongly mitigate that of compounds **2** (2,5 DTBHQ). Indeed compounds **1** (2,5 DTBQ) is two order of magnitude less soluble that state-of-the-art small quinone derivatives reported in table 1 (entry 3-5). Unfortunately there not any solubility reported for reduced quinone molecules to be compared to that of compounds **2** (2,5 DTBHQ). However, such value can be roughly estimated in the case of ref **[4]** by using equilibration tests reported in the figure 2e of this publication for PTO molecules. The latter shows a 3.6% loss of capacity upon 24h rest (OCV) in the reduced state (see Table 1, entry 6). Assuming the saturation limit it reached in the cell upon 24h this value would lead to a maximum solubility of 600 mg/L (2.3 mmol/L) that is approx. 11 times higher than that of compounds **2** (2,5 DTBHQ). We note that the solubility of PTO in the reduced state is presumably significantly higher than this estimation because (i) the electrochemical cell used for this test has a high mass of active material to electrolyte ratio (16.2 mg/ml, table 1, entry 6) and (ii) the tested was limited to 24h. Results are presented in table 1.

Table 1 : Solubility and capacity loss of quinone based derivatives in conventional zinc based aqueous electrolytes. Compounds corresponding to entry 11-12 are polymer or oligomer. In the table, (a) is for Estimated at mAM/Vel= 3/0.5 mg/ml and (b) vs. the maximum observed capacity (c) Estimated from Fig2e ref **[4],** that is 3.6% capacity loss upon 24h rest (OCV) in reduced state.

| **Table 1** (first part): the study of the molecules without references have been performed by the inventors | | | | | |
|---|---|---|---|---|---|
| Entry | Molecule (ref) | Electrolyte | pH | Solubility oxidized state (mmol/L) | Solubility reduced state (mmol/L) |
| 1 | 2,5 DTBQ | 1.25 M Zn(CH₃CO O)₂ | 4-5 | 0.026 | 0.204 |
| 2 | MTBHQ | 1.25 M Zn(CH₃CO O)₂ | 4-5 | | 20.4 |
| 3 | THBQ ref **[1]** | 1M ZnSO₄ | 4-5 | 3.4 | >>3.4 |
| 4 | o-TCBQ ref **[1]** | 1M ZnSO₄ | 4-5 | 2.3 | >>2.3 |
| 5 | TABQ ref **[1]** | 1M ZnSO₄ | 4-5 | 1.7 | >>1.7 |
| 6 | PTO ref **[4]** | 2M ZnSO₄ | 4-5 | N/A | >2.3^{(c)} |
| 7 | PTO | 1.25 M Zn(CH₃CO O)₂ | 3-4 | | |
| 8 | PTO ref **[5]** | 2.5M Li₂SO₄ | 7 | Soluble (Fig. S21) | |
| 9 | PTO ref **[5]** | 4.4M H₂SO₄ | 0 | 0.0047 (Fig. S18) | Presumed Not soluble |
| 10 | p-TCBQ | H₂O | 7 | Slightly soluble | N/A |
| 11 | PTQ-t ref **[7]** | 3M Zn(CF₃SO₃ )₂ | 3.6 | Not soluble | Presumed not soluble |
| 12 | Poly-cathecol ref **[8]** | 4m Zn(TFSI)₂ | 3.5 | Not soluble | Presumed not soluble |

| **Table 1** (second part): | | | | | |
|---|---|---|---|---|---|
| Entry | Molecule (ref) | Solubility factor vs. 2,5 DTBHQ | Maximum expected Qloss (%) ^{(a)} | Observed ΔQₗₒₛₛ (%) upon 100h cycling^{(b} | Active material / Electroly te in cell (mg/ml) |
| 1 | 2,5 DTBQ | | 0.7 | ~0 | 1.2 |
| 2 | MTBHQ | | 55 | | 1.2 |
| 3 | THBQ ref **[1]** | ~100 | >10 | | |
| 4 | o-TCBQ ref **[1]** | ~100 | >9 | | |
| 5 | TABQ ref **[1]** | ~100 | >5 | ~30 | |
| 6 | PTO ref **[4]** | >11 | ~10 | ~43 | 16.7 |
| 7 | PTO | | | | |
| 8 | PTO ref **[5]** | > 10000 | | ~85 | |
| 9 | PTO ref **[5]** | | | ~0 | |
| 10 | p-TCBQ | | | | |
| 11 | PTQ-t ref **[7]** | | | ~0 | |
| 12 | Poly-cathecol ref **[8]** | | | ~0 | |

### Formulas of certain compounds mentioned in table 1:

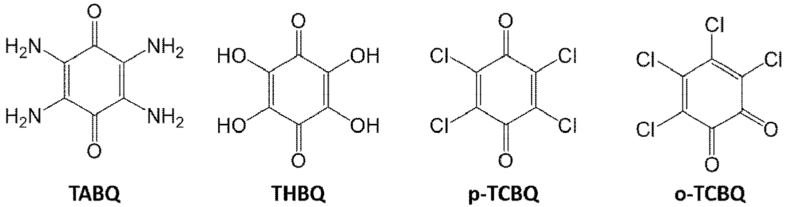

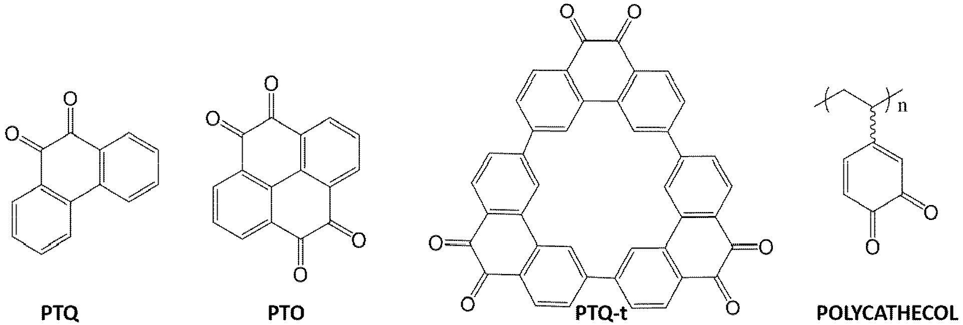

Therefore it can be anticipated that by using a typical lab electrochemical cell (Swagelok or coin cell) containing 3 mg loading of compound **2** and 300 µl of electrolyte (mass of active material to electrolyte volume R=10 mg/ml) the capacity loss due to compound **2** dissolution should be less than 0.6 mAh/g which is barely measurable (Table 1, entry 1). Considering these numbers, compound **2** was tested in a electrochemical cell containing a much small smaller R value of 0.022 (1.13 mg of DTBHQ for 500 ml of electrolyte) to favor the dissolution process (figure 2). In these conditions, the expected capacity loss due to the sole dissolution process is expected to be 100%. Despite of this the latter reached 3 mAh/g (2%) off the maximum capacity therefore indicating that the dissolution process of compound **2** is slow in regard to the cycling conditions. Results are presented in figure 2.

Figure 2: Cycling test of compound 2 in cyclic voltammetry (0.25 mV/s between 1.5 V and 0.3 V (2.7 h / cycle) vs Zn²⁺/Zn) in 1m Zn(CH₃COO)₂ electrolyte with a mass of active material to electrolyte volume ratio R=0.0022 mg/ml.

Hence, compound 2 is by far the most insoluble small quinone type molecule in the ZnB field functioning at pH 4-5 and is comparable to behavior reported for oligomers and polymers (see table 1, entry 11-12) while avoiding multi-steps synthesis.

### Example 7: comparative study of the role of the substitution on the quinone ring - comparative study with other compounds bearing arene groups

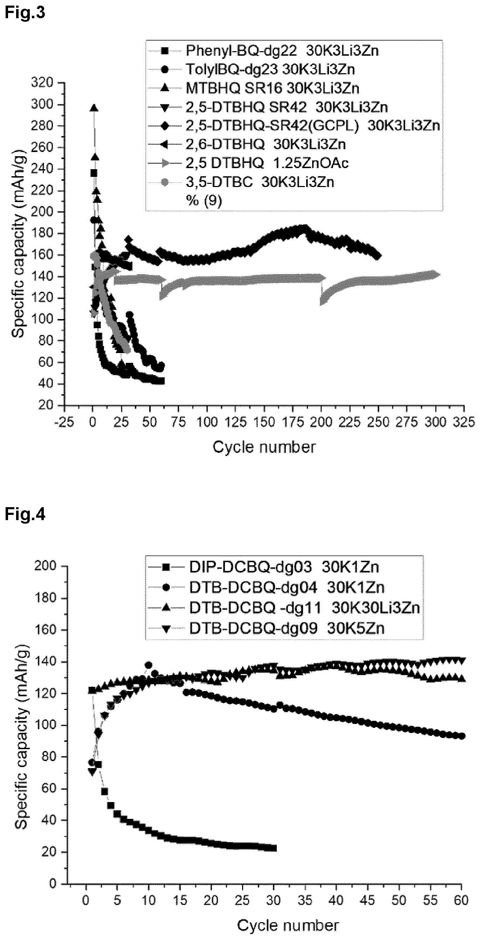

Cyclability measurements of other non-chloro quinone type compounds were performed in an electrochemical cell with R close to 1.2 mg/ml (see figure 3). It can be seen that functionalization of the benzoquinone structural unit by either a tertbutyl group (referred to as compound **8** (MTBHQ), 4 sp³ carbons), a phenyl group (referred to as compound 13, 6sp² carbons) or a tolyl group (referred to as compound **14,** 6sp² + 1 sp³ carbon) cannot prevent the loss of the initial capacity despite the used of highly concentrated electrolyte. The latter is accompanied by coloration of the electrolyte and therefore dissolution of the compound. In the case of compound **8** (table 1, entry 2), 100% of the initial capacity should be lost due to extended dissolution in an electrochemical cell having R - 1.2 mg/ml (see figure 3). Experimentally, the remaining capacity observed after 25 cycles is in fact associated with both capacitive current at the surface of the conducting carbon additive (Keijen Black 600) as well as that corresponding to compound **8** adsorbed species at the surface of the carbon. Results are presented in figure 2 (2,5-DTBHQ is compound **2,** 2,6-DTBHQ is compound **4,** 3,5-DTBC is compound **6,** and MTBHQ is compound **8**).

Figure 3: Galvanostatic cycling (I=0.1 A/g, 1 cycle/3.4 h) with 3 minutes floating at end of discharge and charge for (a) PhenylBQ, (b) TolylBQ, (c) 2,5 DTBHQ, (d) 2,6 DTBHQ, (e) 3,5 DTBC and in 1,25ZnOAc for (f) 2,5 DTBHQ in electrochemical cell having R - 1.2 mg/ml in zinc acetate based aqueous electrolytes: 30m CH₃COOK, 3m CH₃COOLi, 3m Zn(CH₃COO)₂ referred to as 30K3Li3Zn and 1.25 M Zn(CH₃COO)₂ referred to as 1.25 ZnOAc.

To conclude, the use of two hydrophobic tertbutyl groups (referred to as DTB, 8 sp3 carbons) in 2,6 and more especially in 2,5 positions (referred to as DTBHQ) enable to drastically improve the capacity retention. In the case of 2,5 DTBHQ (compound **2**), the capacity first increases over a few tens of cycles from roughly 100 mAh/g to reach 180 mAh/g and 130 mAh/g in 30K3Li3Zn and 1.25 M ZnOAc respectively highlighting that a high salt concentration is not required to prevent capacity loss.

These results are particularly relevant because the pH of 1.25 M ZnOAc is slightly acidic (pH 4-5) whereas that of 30K3Li3Zn is basic (pH 10³) therefore demonstrating the efficiency of the present approach in a large pH range, a point that has never been demonstrated by other small quinone type molecules so far.

### Example 8: comparative study of the role of the substitution on the quinone ring - comparative study with compounds bearing halide groups

Similar compounds but with hydrophilic chloro substituents have been evaluated (figure 4). It appears that two Diisopropyl groups (referred to as DIP, 6 sp³ carbons) attached to the dichloro benzoquinone unit cannot prevent the loss of initial capacity on cycling (see for compound **9** (DIP-DCBQ) in figure 4). On the contrary and similarly to non-chloro compounds, the use of 2 terbutyl groups strongly improves the capacity retention (see for compound **11** (DTB-DCBQ) in figure 4). However, the DTB-DCBQ derivative starts loosing capacity upon roughly the 10 first cycles in 30K1Zn electrolyte but the use of more concentrated electrolyte such as 30K3Li3Zn and 30K5Zn can still stabilize the capacity retention. Results are presented in figure 4 (DIP-DCBQ is compound **9** and DTB-DCBQ is compound **11**).

Figure 4: Galvanostatic cycling (I=0.1 A/g, 1 cycle/3.4 h) with 3 minutes floating at end of discharge and charge for (a) DIP-DCBQ and DTB-DCBQ in 30K1Zn, 30K3Li3Zn and 30K5Zn electrolytes in electrochemical cell having R _{~} 1.2 mg/ml.

### Example 9: Preparation of an electrode starting from quinone

Quinone electrode composition were 70 wt% quinone, 25 wt% carbon black (Ketjen Black), and 5 wt% PTFE. Quinone and Ketjen Black powders were first hand mixed in a mortar until an homogeneous mixture was obtained. PTFE was then added and mixed until a self-supported film was obtained. A piece of this film was subsequently pressed at 624 MPa on a stainless steel (AISI 304L) grid current collector. Caution was taken in preparing quinone electrodes with at least 12 mg/cm² loading.

### Example 10: 2nd cycle cyclic voltammetry for 2,5-DTBHQ (compound 2) in different aqueous electrolytes

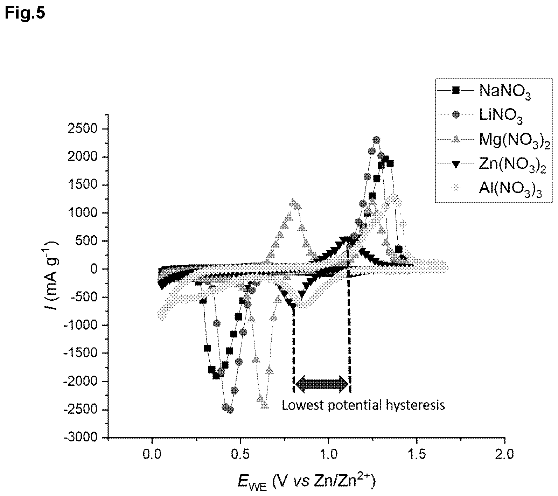

The results reported in figure 5, show drastically the benefit of using an electrode according to the invention in a ZnB.

Figure 5: 2nd cycle cyclic voltammetry for 2,5-DTBHQ (compound **2**) in different aqueous electrolytes at room temperature demonstrating an unexpected gain of over 300 mV for the zinc-based electrolyte.

### List of references

[1] Lin, Z.; Shi, H.-Y.; Lin, L.; Yang, X.; Wu, W.; Sun, X. A High Capacity Small Molecule Quinone Cathode for Rechargeable Aqueous Zinc-Organic Batteries. Nat. Commun. 2021, 12 (1), 4424. https://doi.org/10.1038/s41467-021-24701-9.
[2] Alt, H.; Binder, H.; Köhling, A.; Sandstede, G. Investigation into the Use of Quinone Compounds-for Battery Cathodes. Electrochimica Acta 1972, 17 (5), 873-887. https://doi.org/10.1016/0013-4686(72)90010-2.
[3] Kundu, D.; Oberholzer, P.; Glaros, C.; Bouzid, A.; Tervoort, E.; Pasquarello, A.; Niederberger, M. Organic Cathode for Aqueous Zn-Ion Batteries: Taming a Unique Phase Evolution toward Stable Electrochemical Cycling. Chem. Mater. 2018, 30 (11), 3874-3881. https://doi.org/10.1021/acs.chemmater.8b01317.
[4] Guo, Z.; Ma, Y.; Dong, X.; Huang, J.; Wang, Y.; Xia, Y. An Environmentally Friendly and Flexible Aqueous Zinc Battery Using an Organic Cathode. Angew. Chem. Int. Ed. 2018, 57 (36), 11737-11741. https://doi.org/10.1002/anie.201807121.
[5] Liang, Y.; Jing, Y.; Gheytani, S.; Lee, K.-Y.; Liu, P.; Facchetti, A.; Yao, Y. Universal Quinone Electrodes for Long Cycle Life Aqueous Rechargeable Batteries. Nat. Mater. 2017, 16 (8), 841-848. https://doi.org/10.1038/nmat4919.
[6] Sieuw, L.; Jouhara, A.; Quarez, É.; Auger, C.; Gohy, J.-F.; Poizot, P.; Vlad, A. A H-Bond Stabilized Quinone Electrode Material for Li-Organic Batteries: The Strength of Weak Bonds. Chem. Sci. 2019, 10 (2), 418-426. https://doi.org/10.1039/C8SC02995D.
[7] Nam, K. W.; Kim, H.; Beldjoudi, Y.; Kwon, T.; Kim, D. J.; Stoddart, J. F. Redox-Active Phenanthrenequinone Triangles in Aqueous Rechargeable Zinc Batteries. J. Am. Chem. Soc. 2020, 142 (5), 2541-2548. https://doi.org/10.1021/jacs.9b12436.
[8] Patil, N.; de la Cruz, C.; Ciurduc, D.; Mavrandonakis, A.; Palma, J.; Marcilla, R. An Ultrahigh Performance Zinc-Organic Battery Using Poly(Catechol) Cathode in Zn(TFSI)2-Based Concentrated Aqueous Electrolytes. Adv. Energy Mater. 2021, 11 (26), 2100939. https://doi.org/10.1002/aenm.202100939.

## Claims

1. Electrode material comprising a quinone, wherein the quinone comprises at least one and preferably two hydrophobic functional groups, preferably selected among an aliphatic group and most preferably a branched alkyl group.

2. Electrode material according to claim 1, wherein the quinone is selected among a polyquinone, a polysubstituted benzoquinone molecule and a hydroxyquinone molecule.

3. Electrode material according to any of claims 1 or 2, wherein the quinone has a molecular structure according to one of the formulas I to IV represented below: 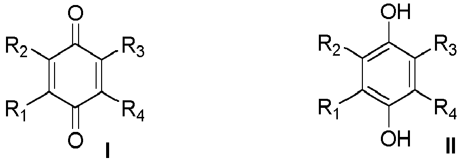 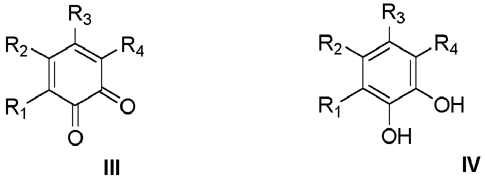 R₁, R₂, R₃ and R₄ being independently selected among a hydrogen atom, an alkyl functional group and a halogen atom; and at least two of the four R₁, R₂, R₃ and R₄ generic groups being a branched alkyl group.

4. Electrode material according to claim 3, wherein the halogen atom is a chlorine atom, and the branched alkyl group is selected among an isopropyl and a tertiobutyl group.

5. Electrode material according to any of claims 3 or 4, wherein in compounds according to formulas **I** or **II,** at least one of the two following option is verified: R₁ is cyclically linked to R₂ to form a six member ring aromatic cycle and R₃ is cyclically linked to R₄ to form a six member ring aromatic cycle; and
in compounds according to formulas **III** or **IV,** R₃ is cyclically linked to R₄ to form a six member ring aromatic cycle.

6. Electrode material according to any of claims 1 to 4, wherein the quinone is selected among one of the following molecules:

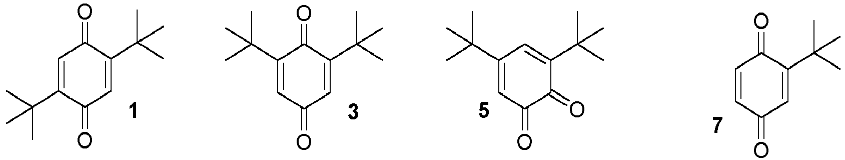

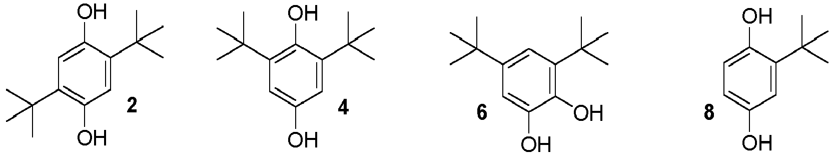

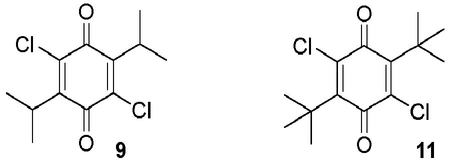

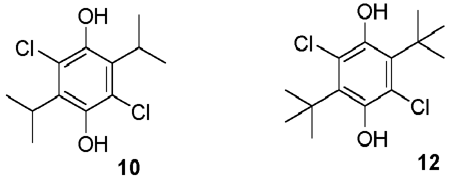

7. Electrode material according to claim 6, wherein the quinone is selected among one of the compounds **1** to **8, 11** and **12.**

8. Cathode comprising the electrode material according to any of claims 1 to 7.

9. Cathode according to claim 8, wherein said electrode material is integrated in a support material.

10. Zinc-ion aqueous battery comprising zinc metal at the negative electrode and comprising a cathode according to any of claims 8 to 9.

11. Process for the preparation of an electrode material according to any of claims 1 to 7, comprising the following steps:
- mixing a quinone in solid form with a mortar and pestle to obtain a homogeneous powder; and
- adding a polymer material to the powder pressing it by hand with the pestle to obtain the electrode material.

12. Use of the electrode material according to any of claims 1 to 7, wherein the electrode material is integrated in the positive electrode of an aqueous battery.

13. Use according to claim 12, wherein the electrode material is a film obtained according to the process according to claim 11, and is integrated in the positive electrode of the aqueous battery upon pressing the electrode film above 600 MPa on a metal current collector.

14. Use according to claim 12 or 13, wherein the aqueous battery is a zinc-ion aqueous battery bearing metal zinc at the negative electrode.
